# EUROPÄISCHE PATENTSCHRIFT

(11) **EP 1 402 235 B1**
(45) Veröffentlichungstag und Bekanntmachung des Hinweises auf die Patenterteilung: **25.05.2005**
(21) Anmeldenummer: 02747203.4
(22) Anmeldetag: 08.06.2002
(51) Int. Cl.: G01F 1/684

(54) **MIKROMECHANISCHER MASSENFLUSSENSOR UND VERFAHREN ZU DESSEN HERSTELLUNG**
MICROMECHANICAL MASS FLOW SENSOR AND METHOD FOR THE PRODUCTION THEREOF
CAPTEUR DE DEBIT MASSIQUE MICROMECANIQUE ET PROCEDE DE FABRICATION DUDIT CAPTEUR

(30) Priorität: 23.06.2001 DE 10130379
(43) Veröffentlichungstag der Anmeldung: 31.03.2004
(73) Patentinhaber: ROBERT BOSCH GMBH, 70442 Stuttgart (DE)
(72) Erfinder: FUERTSCH, Matthias, 72810 Gomaringen (DE); FISCHER, Frank, 72810 Gomaringen (DE); METZGER, Lars, 72458 Albstadt (DE); SUNDERMEIER, Frieder, 72768 Reutlingen (DE)
(86) Internationale Anmeldenummer: PCT/DE2002/002096
(87) Internationale Veröffentlichungsnummer: WO 2003/001158

(56) Entgegenhaltungen:
- EP-A- 1 008 837
- US-A- 5 237 867

## Beschreibung

Die Erfindung betrifft einen mikromechanischen Massenflusssensor in Siliziumtechnologie. Die Erfindung betrifft außerdem ein Verfahren zur Herstellung eines solchen Sensors.

Die Silizium-Mikromechanik ermöglicht die kostengünstige Massenfertigung von kleinen Sensorchips unter Verwendung von Methoden der Halbleitertechnologie. Massenflusssensoren mit Abmessungen in der Größenordnung von einigen Hundert Mikrometer werden beispielsweise im Kfz-Bereich zur Steuerung der Luftzufuhr eingesetzt.

Die bisher, zum Beispiel aus der DE 195 27 861 A1, bekannten Massenflusssensoren in Silizium-Mikromechanik umfassen ein Heizelement und typischerweise mehrere Temperaturmesselemente, die alle aus einer Metall-Widerstandsschicht herausstrukturiert sind und die auf einer dünnen Membran aus dielektrischem Material angeordnet sind. Die Membran überspannt eine Ausnehmung in einem Siliziumsubstrat.

Wenn ein Mediumstrom, insbesondere ein Luftstrom auf der Oberseite der Membran entlangströmt, so bewirkt dieser Mediumstrom eine Abkühlung der Membran. Diese Abkühlung kann insbesondere durch ein (relativ zum Heizelement) stromaufwärts gelegenes Temperaturmesselement und ein weiteres, jedoch flussabwärts gelegenes Temperaturmesselement ausgewertet werden, wobei das stromaufwärts gelegene Messelement stärker abgekühlt wird als das flussabwärts gelegene. Alternativ ist es auch möglich, durch eine Widerstandsmessung des Heizelementes die Abkühlung der Membran zu bestimmen. Bei den Temperaturmesselementen handelt es sich ebenfalls um Widerstände, die aus einem Material bestehen, dessen Widerstand temperaturabhängig ist. Ein besonders geeignetes Material für den Heizer und die Temperaturmesselemente ist Platin:

Aus der DE 195 27 861 A1 ist es dabei auch bekannt, zur Herstellung eines derartigen Membran-Sensors von einem Siliziumsubstrat auszugehen und auf dessen Oberseite zunächst eine Membranschicht aus Siliziumoxid, Siliziumnitrid oder ähnlichen Materialien abzuscheiden. Auf der Membranschicht wird dann ganzflächig eine Metallschicht aufgebracht, aus der durch Photolithographie und Ätzen die Mess/Heizelemente, Leiterbahnen usw. herausstrukturiert werden. In einem weiteren Prozessschritt erfolgt, ausgehend von der Rückseite des Siliziumssubstrats, die Einätzung der Ausnehmung mittels eines Ätzrahmens, so dass nur ein Rahmen aus Silizium mit der darin aufgespannten Membran übrigbleibt. Anschließend liegt die Unterseite der Membranschicht (außer dort, wo sie den Rahmen überdeckt) offen, sie grenzt also an Luft.

Durch diese bekannte Membran-Konstruktion wird eine thermische Isolation zwischen den aus der Metallschicht herausstrukturierten Widerständen und dem Substrat geschaffen, die durch die Ausnehmung bzw. durch die in ihr vorhandene Luft (die Wärmeleitfähigkeit von Luft oder SiO₂ ist etwa zwei Größenordnungen geringer als die von Silizium) gewährleistet wird. Ohne Ausnehmung würde ein wesentlicher Teil der vom Heizelement erzeugten Wärme nicht durch das vorbeiströmende Medium abgeführt, sondern über die Membranschicht zum Siliziumsubstrat abfließen. Diese lateral und vertikal ins Substrat abfließende Wärme wäre schon deshalb problematisch, da sich eine vorgegebene, auch für die Messempfindlichkeit wichtige Arbeitstemperatur allenfalls noch durch einen gesteigerten Energieverbrauch des Heizers realisieren ließe.

Besonders problematisch wäre ein lateraler Wärmeabfluss hinsichtlich der typischerweise lateral neben dem Heizer angeordneten Messelemente, da deren Funktion auf dem Bestehen eines Temperaturgradienten beruht. Dieser besteht zwischen dem durch das Heizelement erhitzten Zentrum der Membran und dem Rand des Sensors, der möglichst die Umgebungstemperatur aufweisen soll. Bei einem lateralen Wärmeabfluss (zu dem die direkte thermische Kopplung über die Membran selbst nicht wesentlich beiträgt) würden die Temperaturmesselemente via Substrat mitgeheizt. Der verringerte Temperaturgradient Heizer/Messelemente ginge unmittelbar mit einer verringerten Empfindlichkeit des Sensors einher. Eine thermische Entkopplung in lateraler und vertikaler Richtung erscheint deshalb unverzichtbar.

Die bekannten Membran-Sensoren setzen zu ihrer Herstellung allerdings, wie beschrieben, einen volumenmikromechanischen Prozess von der Substrat-Rückseite her voraus. Diese Strukturierung der Membran erfolgt üblicherweise über einen KOH-Ätzprozess, bei dem der Wafer in eine Ätzdose eingebaut wird. Das Herstellungsverfahren in Bulksiliziummikromechanik mit integriertem Rückseitenprozess ist sehr aufwendig und daher mit hohen Kosten verbunden. Außerdem neigt die dünne Membran mit typischen Dicken von 1 bis 2 µm aufgrund ihrer geringen mechanischen Stabilität zu unerwünschten Schwingungen.

Aus der E P 1 008 837 A1 ist ein Sensorchip bekannt, der unterhalb der mit Heiz- und Sensorelementen ausgestatteten Membran eine wabenförmige Struktur zur thermischen Isolation und zum Schutz vor Zerstörung aufweist. Zur Realisierung eines Massenflusssensors wird der so strukturierte Sensorchip auf ein Silikonsubstrat aufgebondet.

Ziel der vorliegenden Erfindung ist es, einen mikromechanischen Massenflusssensor anzugeben, der weniger aufwendig als bisher herstellbar ist und der eine genügende Empfindlichkeit und mechanische Stabilität aufweist. Zugleich soll mit der Erfindung ein entsprechendes Herstellverfahren für einen solchen Sensor angegeben werden.

Dieses Ziel wird erreicht durch einen Sensor gemäß Anspruch 1 sowie durch ein erfindungsgemäßes Verfahren zur Herstellung dieses Sensors gemäß Anspruch 6. Weitere Ausgestaltungen der Erfindung gehen aus den übrigen Ansprüchen hervor.

Die Erfindung schafft einen mikromechanischen Massenflusssensor
- mit einem Schichtaufbau auf der Oberseite eines Siliziumsubstrats,
- wobei der Schichtaufbau eine elektrisch leitende Schicht umfasst, aus der mindestens ein Heizelement herausstrukturiert ist,
- und mit einer thermischen Isolation zwischen dem Heizelement und dem Siliziumsubstrat,
- die einen Siliziumdioxidblock umfasst,
- der unterhalb des Heizelementes entweder im Schichtaufbau auf dem Siliziumsubstrat oder in der Oberseite des Siliziumsubstrats hergestellt ist.

Der Erfindung liegt die Idee zugrunde, die thermische Isolation zwischen den (Platin)Widerständen und dem Siliziumsubstrat maßgeblich über eine ausreichend dicke Siliziumdioxidschicht zu erreichen, die auch genügende mechanische Stabilität aufweist. Diese Siliziumdioxidschicht ist als Oxidblock ausgebildet und entweder direkt von der Oberseite her in das Siliziumsubstrat hineinstrukturiert, oder in einem entsprechenden Schichtaufbau auf dem Siliziumsubstrat hergestellt. Im letzteren Fall ist auf dem Siliziumsubstrat eine Siliziumoxidschicht und darüber eine Siliziumschicht aufgebracht und der Siliziumdioxidblock ist in der Siliziumschicht hergestellt.

Der erfindungsgemäße Sensor hat den Vorteil, dass nur oberflächenmikromechanische Prozesse, also nur Vorderseitenprozesse zur Herstellung notwendig sind, wodurch aufwendige Rückseitenprozesse entfallen können. Durch den Wegfall des KOH-Ätzschrittes von der Rückseite her ist darüber hinaus eine Miniaturisierung des Bauelementes möglich. Ein weiterer Vorteil ist die Reduktion von Kratzern bzw. Partikeln auf der Wafervorderseite, die im Zusammenhang mit dem Handling bei Rückseitenprozessen kaum vermeidbar sind.

Eine besonders vorteilhafte Ausgestaltung dieses Sensors besteht darin, dass im Oxidblock eine Mehrzahl von vertikalen, spaltenförmigen Hohlräumen gebildet ist. Da die Hohlräume Luft bzw. ein Vakuum enthalten, ist die thermische Isolation durch den derart strukturierten Oxidblock erheblich gesteigert.

Die zuvor erwähnte Ausbildung des Oxidblocks im Schichtaufbau eröffnet die Möglichkeit, die Siliziumoxidschicht unterhalb des Oxidblocks zu entfernen und dort, zum Siliziumsubstrat hin, einen horizontalen Hohlraum auszubilden, der dann wesentlich zur thermischen Isolation beiträgt.

Vorteilhafterweise ist in dem horizontalen Hohlraum mindestens eine, nach oben an den Siliziumdioxidblock und nach unten an das Siliziumsubstrat angrenzende Stütze angeordnet, die die mechanische Stabilität weiter verbessert.

Die Erfindung schafft ferner ein Verfahren zur Herstellung eines Sensors,
- bei dem nach Strukturierung einer Ätzmaske, die entweder auf einer Siliziumschicht, die oberhalb einer Siliziumoxidschicht auf dem Siliziumsubstrat aufgebracht wird, oder unmittelbar auf dem Siliziumsubstrat aufgebracht wird, durch Ätzung annähernd senkrechte Gräben in dem unter der Ätzmaske befindlichen Siliziummaterial erzeugt werden, wobei zwischen den Gräben Stege aus Silizium übrig bleiben,
- bei dem anschließend die Stege durch thermische Oxidation vollständig aufoxidiert werden,
- bei dem der derart oberflächenmikromechanisch erzeugte Siliziumdioxidblock durch Abscheidung einer Siliziumdioxid-Verschlussschicht abgedeckt wird,
- und bei dem vor dem Abscheiden und Strukturieren der elektrisch leitenden Schicht ein Einebnungsschritt zur Herstellung einer glatten Oberfläche auf dem Siliziumdioxidblock erfolgt.

Das erfindungsgemäße Verfahren erlaubt die einfache Herstellung des Sensors, wobei nur Verfahrensschritte verwendet werden, die aus der Halbleitertechnik gut bekannt sind. Dies ermöglicht die Herstellung einer reproduzierbaren Schichtdicke und Struktur des Oxidblockes. Insbesondere können, mit Blick auf eine höhere Porösität und damit Isolation des Oxidblocks, die Siliziumschicht oder das Siliziumsubstrat unter der Ätzmaske durch isotropes Ätzen unterätzt werden. Wenn die Ätzmaske nach dem Ätzen auf den Stegen verbleibt und später mit abgedeckt wird, ist es ohne weiteres möglich, breitere Gräben bei dünneren Stegen zu erzeugen. Generell sind erfindungsgemäß nur wenig Schichten und Photolithografieschritte erforderlich.

Eine besonders vorteilhafte Ausgestaltung des erfindungsgemäßen Verfahrens besteht darin, zur Planarisierung eine Siliziumoxidschicht abzuscheiden und anschließend durch chemisch-mechanisches Polieren (CMP) zu planarisieren. Dies kann mittels einer Siliziumoxid-Hilfsschicht oder auch unter Verwendung der Siliziumdioxid-Verschlussschicht durchgeführt werden. Auf diese Weise wird der wegen der später aufzubringenden dünnen, empfindlichen elektrisch leitenden Schicht erforderliche Schritt zur Einebnung der Topographie besonders einfach.

Die Erfindung wird nachfolgend an Ausführungsbeispielen anhand der Zeichnungen näher erläutert. Die Figuren sind nicht maßstabsgetreu.

Figur 1 bis 20 zeigen in seitlicher Schnittdarstellung verschiedene Varianten des erfindungsgemäßen Sensors in verschiedenen Stadien des Herstellungsverfahrens:
Figur 1, 2 oder 3, und 4 bis 7 zeigen aufeinander folgende Herstellungsschritte eines ersten Ausführungsbeispiels;
Figur 8 bis 10 zeigen aufeinander folgende Herstellungsschritte eines zweiten Ausführungsbeispiels, das gemäß Figur 11 bis 14 zu einer weiteren Variante ausgestaltet ist;
Figur 15 zeigt eine bei allen Varianten einsetzbare Ausgestaltung des Herstellungsverfahrens;
Figur 16 bis 18 und 19 bis 20 zeigen jeweils aufeinander folgende Schritte zweier zur Einebnung einsetzbaren Ausgestaltungen des Herstellungsverfahrens.

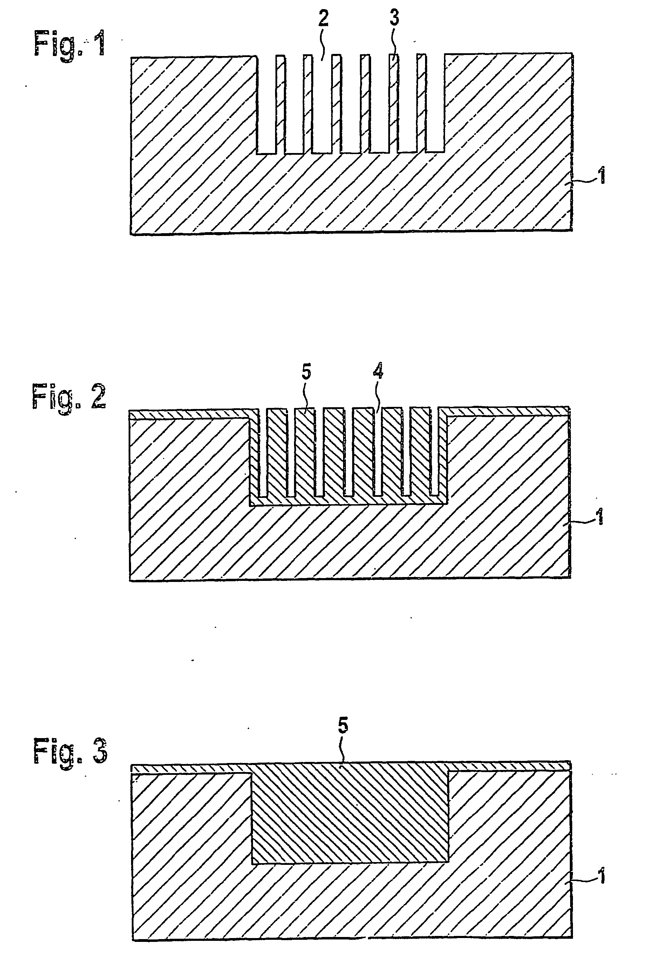

Figur 1 zeigt ein Siliziumsubstrat 1, in dem bereits von der Oberseite her Gräben 2 durch Ätzen erzeugt wurden. Ähnliche, jedoch nur bis etwa 20 µm tiefe und zu anderen Zwecken erzeugte Gräben sind bereits aus der Oberflächenmikromechanik bekannt. Die Breite der die Gräben 2 trennenden Stege 3 wird so gewählt, dass die Stege 3 bei der nachfolgenden thermischen Oxidation auf jeden Fall vollständig aufoxidiert werden. Der danach erreichte Zustand ist für den Fall, dass die anfängliche Breite der Gräben 2 so gewählt war, dass nach vollständigem Aufoxidieren der Stege 3 zwischen diesen ein Spalt 4 übrig bleibt, in Figur 2 dargestellt. Die anfängliche Breite der Gräben 2 kann auch so gewählt werden, dass die Gräben 2 vollständig verschlossen werden, vgl. Figur 3.

Um zusätzliche Hohlräume zu schaffen, ist es auch möglich, von Anfang an zusätzliche Gräben quer zu den Gräben 2 zu ätzen. Die Stege 3 weisen in diesem Fall Unterbrechungen auf und bestehen genau genommen aus säulenförmigen Stegelementen.

Die thermische Oxidation ist ein relativ langsamer Oberflächenprozess, der jedoch auch in den Gräben ein konformes Wachstum des Oxids bewirkt. In jedem Fall muss der Prozess so lange fortgesetzt werden, bis die typischerweise 1 bis 5 µm breiten Stege 3 jeweils durch und durch aus SiO₂ bestehen.

Mit dem Zustand gemäß Figur 2 bzw. 3 ist der eigentliche Oxidblock 5 mit der erwünschten niedrigen Wärmeleitfähigkeit bereits hergestellt. Im Folgenden wird immer die Ausführung mit Spalten 4 gemäß Figur 2 weiter diskutiert, da der so strukturierte Oxidblock 5 Isolationsvorteile mit sich bringt. Die erforderliche Dicke des Oxidblocks 5 ist einerseits nach den Anforderungen zu wählen und kann andererseits durch vertikale und/oder horizontale Hohlräume verringert werden. Typischerweise wird eine Dicke von bis zu 100 µm ausreichend sein. Mit der Dicke des Oxidblocks 5 wächst die mechanische Stabilität des Sensors.

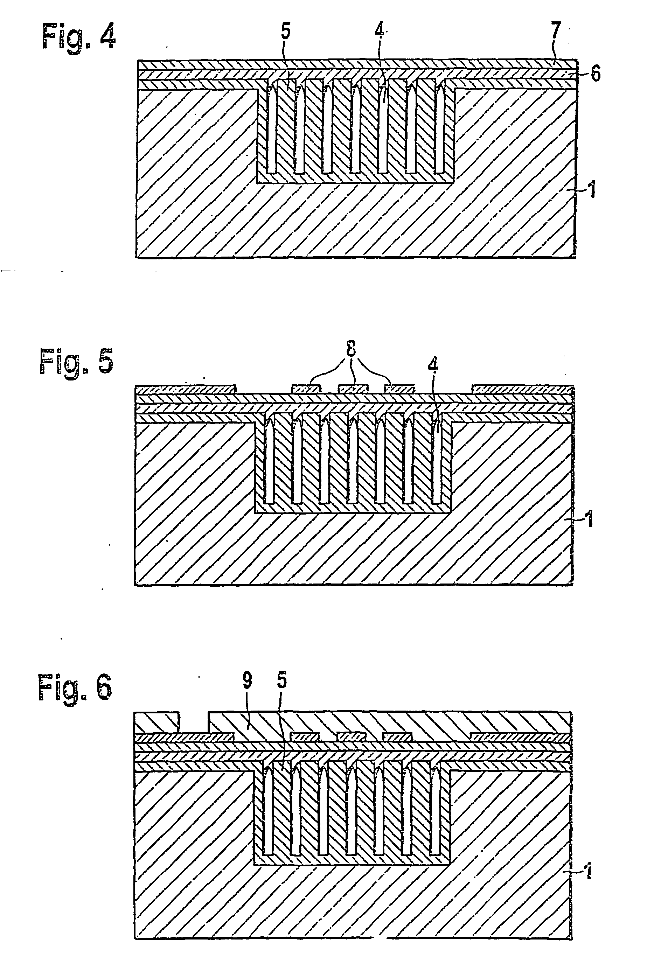

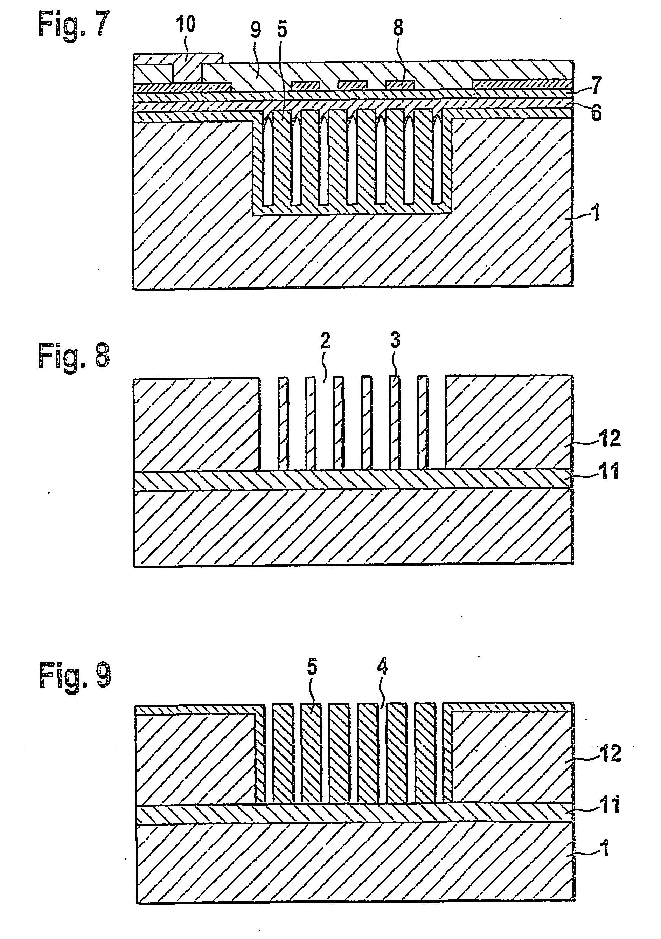

Als nächster Schritt wird ganzflächig auf das Substrat 1 eine Oxid-Verschlussschicht 6 und darüber eine Nitridschicht zur Feuchteabweisung abgeschieden, so dass der Zustand gemäß Figur 4 resultiert. Im darauf folgenden Schritt wird die Platinschicht für die Widerstände 8 (Heiz-und Messelemente), Pads usw. abgeschieden und strukturiert, vgl. Figur 5. Die Abstände der Widerstände 8 betragen typischerweise nur wenige µm, so dass gegebenenfalls viele nebeneinander angeordnet werden können. Statt Platin kann eine andere elektrisch leitende Schicht, insbesondere aus Metall, Polysilizium oder Germanium, erzeugt und strukturiert werden. Schließlich kann eine Oxid-Schutzschicht 9 mit einer Dicke von nur einigen nm abgeschieden und strukturiert werden, vgl. Figur 6. Abschließend erfolgt das Abscheiden und Strukturieren der Aluminium-Leiterbahnen 10, so dass sich der fertige Sensor gemäß Figur 7 ergibt.

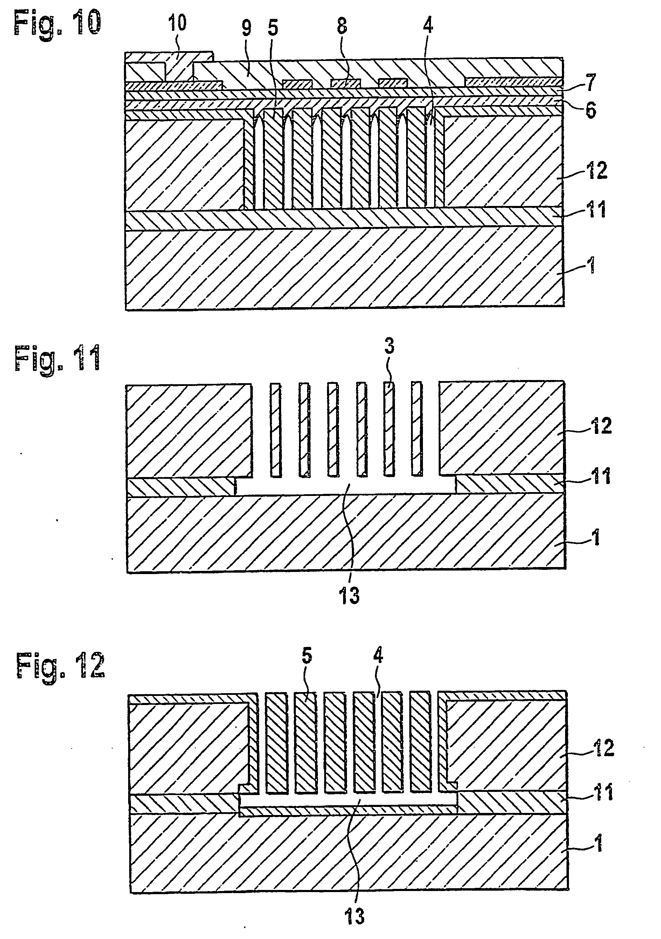

Figur 8 und 9 zeigen eine Variante des Sensors, bei der Oxidblock 5 nicht im Substrat 1 selbst, sondern in einem geeigneten Schichtaufbau auf dessen Oberseite erzeugt ist. Gemäß Figur 8 wird von einem Substrat 1 ausgegangen, auf dem eine (vergrabene) bxidschicht 11 und eine (zum Beispiel epitaktisch aufgewachsene Poly-) Siliziumschicht 12 aufgebracht sind. Die Oxidschicht 11 dient vorteilhafterweise als Ätzstopp beim Erzeugen der Siliziumstege 3 und der Gräben 2. Figur 9 zeigt, analog zu Figur 2, den durch vollständiges Aufoxidieren der Siliziumstege 3 mittels thermischer Oxidation erzeugten Oxidblock 5. Die weiteren Verfahrensschritte können sich analog zu den bereits in den Figuren 4 bis 6 dargestellten Schritten vollziehen, so dass sich schließlich das Endresultat gemäß Figur 10 ergibt.

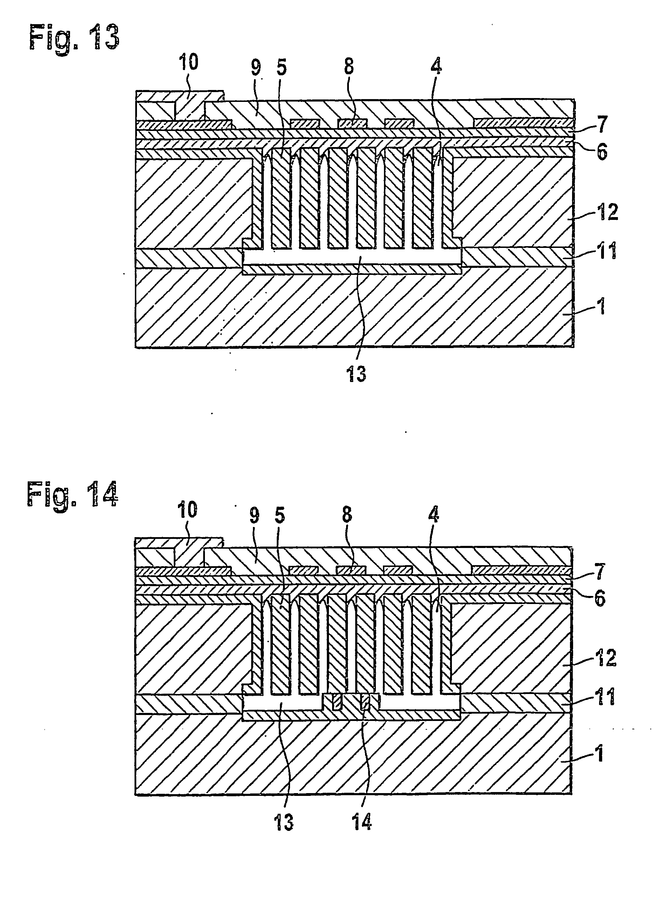

Die zuletzt dargestellte Variante kann besonders sinnvoll als Ausgangspunkt für eine weitere Variante verwendet werden, wobei zunächst ein Gasphasenätzschritt erfolgt, der zur partiellen Entfernung der Oxidschicht 11 unterhalb der strukturierten Siliziumschicht führt. Dort wird demnach ein horizontaler Hohlraum 13, vgl. Figur 11, erzeugt, der zur zusätzlichen thermischen Isolation zwischen den Platinwiderständen 8 und dem Substrat 1 dient. Danach wird wieder der Oxidblock 5 in der Siliziumschicht 12 analog zu Figur 8 und 9 erzeugt, so dass der Fertigungszustand gemäß Figur 12 resultiert. Die weiteren Schritte können sich in der bereits beschriebenen Weise vollziehen, was zum Endzustand gemäß Figur 13 führt. Die erforderliche Dicke des Oxidblocks 5 kann durch den zusätzlichen Hohlraum 13 um, bzw. auf, einen Bruchteil reduziert werden.

Figur 14 zeigt einen fertigen Sensor 1, der mit der Ausführung gemäß Figur 13 übereinstimmt, jedoch ist im horizontalen Hohlraum 13 zusätzlich mindestens eine, nach oben an den Oxidblock 5 und nach unten an das Substrat 1 angrenzende Stütze 14 angeordnet. Vom Prozessablauf her muss dazu vor dem Aufbringen der Siliziumschicht 12 die Oxidschicht 11 entsprechend strukturiert werden. Durch die Stützen 14 wird eine höhere mechanische Stabilität dieses Sensoraufbaus ermöglicht, so dass der Oxidblock 5 durch den zu messenden Luftstrom nicht in Schwingungen versetzt werden kann.

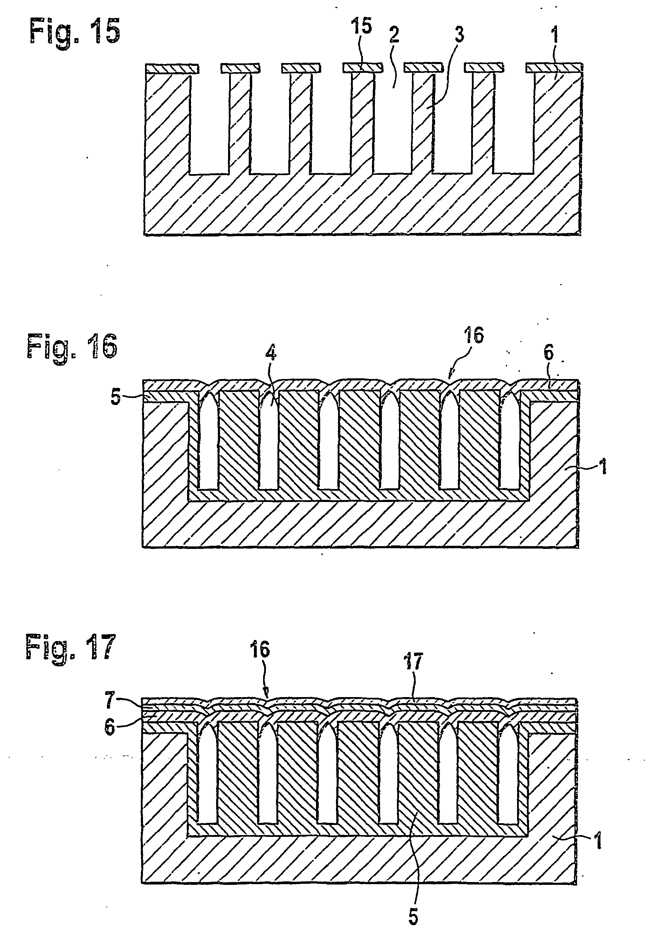

Figur 15 zeigt eine besonders günstige Verfahrensweise, um breitere Gräben 2 bei dünneren Stegen 3 zu erzeugen. Dabei wird die nach dem Ätzen der Gräben 2 übrig gebliebene Ätzmaske 15 (Hardmask, insbesondere SiO₂) nicht entfernt, sondern bleibt bei der anschließenden thermischen Oxidation auf dem Substrat 1. Vorteilhaft in diesem Zusammenhang sind Trenchprozesse mit starker, durch isotropes Ätzen verursachter Unterätzung, wie in Figur 15 erkennbar. Die Ätzmaske 15 bleibt in diesem Fall nach dem Trenchprozess mit einer geringeren Öffnung als die Grabenbreite bestehen. Dadurch wird nach dem Aufoxidieren der Stege 3 ein Verschließen auch von breiten Gräben 2 bzw. Spalten 4 beispielsweise durch eine SiO₂-Verschlussschicht möglich. Durch die breiten Gräben 2 bzw. Spalten 4 kann eine höhere Porösität mit dem entsprechenden Isolationsvorteil erzeugt werden.

Wie in Figur 16 gezeigt ist, führt das Abdecken des Oxidblocks 5, beispielsweise mit der Oxid-Verschlussschicht 6, nicht unmittelbar zu einer ebenen Oberfläche. Wie sich in REM-Untersuchungen herausstellte, entstehen Vertiefungen 16 über den Spalten 4. Diese unerwünschte Topographie von nur wenigen Mikrometern ist trotzdem hoch problematisch im Hinblick auf die später aufzubringende Metallschicht. Die typische Dicke der Platinschicht ist ungefähr eine Größenordnung geringer als die Topographie, so dass eine erhebliche Gefahr des Zerbrechens bestünde.

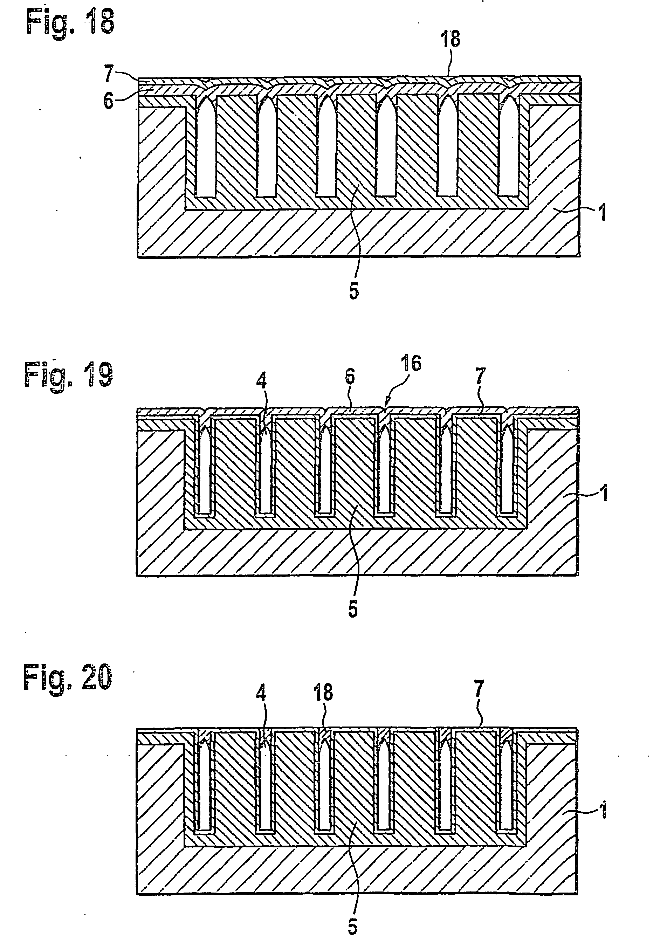

Figur 17 zeigt eine Möglichkeit der Einebnung der in Figur 16 dargestellten Topographie. Auf die Oxid-Verschlussschicht 6 wird zunächst eine Nitridschicht 7 abgeschieden, wobei die Vertiefungen 16 ersichtlich bestehen bleiben. Auf die Nitridschicht 7 wird anschließend eine SiO₂-Hilfsschicht 17 für die nachfolgende Planarisierung abgeschieden. Die Planarisierung der Hilfsschicht 17 erfolgt mittels des an sich bekannten CMP (Chemical-Mechanical-Polishing)-Verfahrens bis zur Nitridschicht 7, die hier zunächst als Planarisierstop dient. Ein Restoxid 18 bleibt in den Vertiefungen 16 übrig und planarisiert die Oberfläche, wie in Figur 18 erkennbar. Anschließend können Platinstrukturen, Oxidschutzschichten und Aluminium-Leiterbahnen abgeschieden und strukturiert werden, wie weiter oben bereits beschrieben.

Eine weitere Möglichkeit zur Einebnung zeigt Figur 19. Bei dieser Abwandlung wird die Nitridschicht 7 vor der Oxid-Verschlussschicht 6 abgeschieden. Dies erspart die nachträgliche Abscheidung der zuvor beschriebenen Oxid-Hilfsschicht 17.

In Figur 19 ist die abgeschiedene Nitridschicht 7 und die darüber abgeschiedene Oxid-Verschlussschicht 6 erkennbar, die wiederum Vertiefungen 16 aufweist. Das Planarisieren der Struktur bis zur Nitridschicht 7 , die als Planarisierstop dient, kann wieder, wie zuvor beschrieben, mittels CMP erfolgen. An den Stellen, an denen sich zuvor die kritischen Vertiefungen 16 befanden, bleiben danach Reste 18 der Oxid-Verschlussschicht 6 stehen, vgl. Figur 20. Zur Haftungsverbesserung der Platinstrukturen kann die Nitridschicht 7 in an sich bekannter Weise durch einen Reoxidationsprozess oberflächlich wieder in eine Oxidschicht umgewandelt werden. Anschließend können Platinstrukturen, Oxidschutzschichten und Aluminium- Leiterbahnen wie zuvor beschrieben abgeschieden bzw. strukturiert werden.

Zur Einebnung kann als Alternative zum CMP-Planarisieren eine Passivierungsschicht im Spin-on-Glas Verfahren auf die Oberfläche aufgebracht werden. Durch Verfließen füllt die Passivierungsschicht die Vertiefungen 16. Eine dünne Oxidschicht kann anschließend für die Haftung der Platinstrukturen abgeschieden werden.

Als weitere Einebnungs-Alternative kann BPSG oder PSG durch ein Flow-Glas-Verfahren aufgebracht werden, das ebenso wie das Spin-on-Glas Verfahren aus der Technologie hochintegrierter Schaltungen bekannt ist. Durch das Fließen werden die Vertiefungen 16 gefüllt und es bildet sich eine glatte Oberfläche. Eine dünne Oxidschicht kann anschließend abgeschieden werden.

Weiterhin kann die Topographie durch an sich bekannte CVD-Abscheideverfahren ausreichend verringert werden. Durch geeignete Abscheideparameter werden hierbei nur die Vertiefungen 16 mit SiO₂ gefüllt. Eine nahezu planare Ebene stellt sich ein.

## Patentansprüche

1. Mikromechanischer Massenflusssensor, mit
- einem Schichtaufbau auf der Oberseite eines Siliziumsubstrats (1), wobei der Schichtaufbau eine elektrisch leitende Schicht umfasst, aus der mindestens ein Heizelement (8) herausstrukturiert ist, und
- einer thermischen Isolation zwischen dem Heizelement (8) und dem Siliziumsubstrat (1), die einen Siliziumdioxidblock (5) umfasst, der
- unterhalb des Heizelementes (8) entweder im Schichtaufbau auf dem Siliziumsubstrat (1) oder in der Oberseite des Siliziumsubstrats (1) hergestellt ist und
- eine Mehrzahl von vertikalen, spaltenförmigen Hohlräumen (4) aufweist.,
**dadurch gekennzeichnet, dass**
die Hohlräume (4) durch eine Verschlussschicht (6) verschlossen sind.

2. Sensor nach Anspruch 1,
bei dem auf dem Siliziumsubstrat (1) eine Siliziumoxidschicht (11) und darüber eine Siliziumschicht (12) aufgebracht ist und bei dem der Siliziumdioxidblock (5) in der Siliziumschicht (12) hergestellt ist.

3. Sensor nach Anspruch 2,
bei dem die Siliziumoxidschicht (11) unterhalb des Siliziumdioxidblocks (5) entfernt und dort, zum Siliziumsubstrat (1) hin, ein horizontaler Hohlraum (13) gebildet ist.

4. Sensor nach Anspruch 3,
bei dem in dem horizontalen Hohlraum (13) mindestens eine, nach oben an den Siliziumdioxidblock (5) und nach unten an das Siliziumsubstrat (1) angrenzende Stütze (14) angeordnet ist.

5. Sensor nach einem der Ansprüche 1 bis 4,
bei dem zwischen dem Siliziumdioxidblock (5) und der strukturierten elektrisch leitenden Schicht eine Siliziumdioxid-Verschlussschicht (6) und eine Siliziumnitridschicht (7) aufgebracht sind.

6. Verfahren zur Herstellung eines Sensors nach Anspruch 1,
- bei dem nach Strukturierung einer Ätzmaske, die entweder auf einer Siliziumschicht (12), die oberhalb einer Siliziumoxidschicht (11) auf dem Siliziumsubstrat (1) aufgebracht wird, oder unmittelbar auf dem Siliziumsubstrat (1) aufgebracht wird, durch Ätzung annähernd senkrechte Gräben (2) in dem unter der Ätzmaske befindlichen Siliziummaterial (1, 12) erzeugt werden, wobei zwischen den Gräben (2) Stege (3) aus Silizium übrig bleiben,
**dadurch gekennzeichnet, daß**
- anschließend die Stege (3) durch thermische Oxidation vollständig aufoxidiert werden,
- ein in der Siliziumschicht (12) oder im Siliziumsubstrat (1) derart oberflächenmikromechanisch erzeugter Siliziumdioxidblock (5) durch Abscheidung einer Siliziumdioxid-Verschlussschicht (6) abgedeckt wird,
- und bei dem vor dem Abscheiden und Strukturieren der elektrisch leitenden Schicht ein Einebnungsschritt zur Herstellung einer glatten Oberfläche auf dem Siliziumdioxidblock (5) erfolgt.

7. Herstellverfahren nach Anspruch 6,
bei dem die Ätzmaske auf der Siliziumschicht (12) aufgebracht wird, und bei dem vor dem Aufoxidieren der Stege (3) die Siliziumoxidschicht (11) zur Schaffung eines horizontalen Hohlraums (13) unterhalb des strukturierten Gebiets der Siliziumschicht (12) mindestens teilweise durch einen Gasphasenätzschritt entfernt wird.

8. Herstellverfahren nach Anspruch 7,
bei dem die Siliziumoxidschicht (11) zur Schaffung mindestens einer Stütze (14) im Hohlraum (13) vor dem Aufbringen der Siliziumschicht (12) strukturiert wird.

9. Herstellverfahren nach Anspruch 6,
bei dem die Siliziumschicht (12) oder das Siliziumsubstrat (1) unter einer Hardmask (15) durch isotropes Ätzen unterätzt wird, und bei dem die Hardmask (15) nach dem Ätzen auf den Stegen (15) verbleibt und später mit abgedeckt wird.

10. Herstellverfahren nach einem der Ansprüche 6 bis 9,
bei dem auf der Siliziumdioxid-Verschlussschicht (6) eine Nitridschicht (7) abgeschieden wird, auf die zur Planarisierung eine Siliziumoxid-Hilfsschicht (17) abgeschieden und anschließend bis zur Nitridschicht (7) planarisiert wird.

11. Herstellverfahren nach einem der Ansprüche 6 bis 9,
bei dem auf die aufoxidierten Strukturen in der Siliziumschicht (12) oder im Siliziumsubstrat (1) zunächst eine Nitridschicht (7) und danach eine Siliziumdioxid-Verschlussschicht (6) abgeschieden wird, die anschließend bis zur Nitridschicht (7) planarisiert wird.

12. Herstellverfahren nach einem der Ansprüche 10 oder 11,
bei dem die Planarisierung durch chemisch-mechanisches Polieren (CMP) der Siliziumoxid-Hilfsschicht (17) oder der Siliziumdioxid-Verschlussschicht (6) erfolgt, wobei die Nitridschicht (7) als Planarisierungsstop dient.

13. Herstellverfahren nach einem der Ansprüche 6 bis 9,
bei dem die Einebnung durch ein Spin-on-Glas-Verfahren oder durch eine Flow-Glas-Verfahren erfolgt.

## Claims

1. Micromechanical mass flow sensor, having
- a layered structure on the upper side of a silicon substrate (1), with the layered structure comprising an electrically conductive layer from which at least one heating element (8) is patterned, and
- a thermal insulation between the heating element (8) and the silicon substrate (1) which comprises a silicon dioxide block (5) which
- is manufactured underneath the heating element (8) either in the layered structure on the silicon substrate (1) or in the upper side of the silicon substrate (1)
and
- has a plurality of vertical, gap-shaped cavities (4),
**characterized in that** the cavities (4) are closed off by a sealing layer (6).

2. Sensor according to Claim 1,
in which a silicon oxide layer (11) is applied to the silicon substrate (1) and a silicon layer (12) is applied to said silicon oxide layer (11), and in which the silicon dioxide block (5) is manufactured in the silicon layer (12).

3. Sensor according to Claim 2,
in which the silicon oxide layer (11) is removed underneath the silicon dioxide block (5) and a horizontal cavity (13) is formed there in the direction of the silicon substrate (1).

4. Sensor according to Claim 3,
in which at least one support (14) which adjoins the silicon dioxide block (5) at the top and the silicon substrate (1) at the bottom is arranged in the horizontal cavity (13).

5. Sensor according to one of Claims 1 to 4,
in which a silicon dioxide sealing layer (6) and a silicon nitride layer (7) are applied between the silicon dioxide block (5) and the patterned, electrically conductive layer.

6. Method for manufacturing a sensor according to Claim 1,
- in which, after the patterning of an etching mask which is applied either to a silicon layer (12) which is applied to the silicon substrate (1) above a silicon oxide layer (11), or is applied directly to the silicon substrate (1), approximately vertical trenches (2) are produced by etching in the silicon material (1, 12) located under the etching mask, with webs (3) made of silicon remaining between the trenches (2), **characterized in that** the webs (3) are subsequently completely oxidized on by thermal oxidation, in such a way that a silicon dioxide block (5) which is produced in the silicon layer (12) or in the silicon substrate (1) in a surface-micromechanical fashion is covered by depositing a silicon dioxide sealing layer (6),
- and in which a levelling step for manufacturing a smooth surface on the silicon dioxide block (5) is carried out before the deposition and structuring of the electrically conductive layer.

7. Manufacturing method according to Claim 6,
in which the etching mask is applied to the silicon layer (12), and in which, before the webs (3) are oxidized on, the silicon oxide layer (11) is at least partially removed by means of a gas-phase etching step in order to form a horizontal cavity (13) underneath the structured region of the silicon layer (12).

8. Manufacturing method according to Claim 7,
in which the silicon oxide layer (11) is patterned in the cavity (13) before the silicon layer (12) is applied, in order to form at least one support (14).

9. Manufacturing method according to Claim 6,
in which the silicon layer (12) or the silicon substrate (1) are underetched under a hard mask (15) by means of isotropic etching, and in which the hard mask (15) remains on the webs (15) after the etching and is later also covered.

10. Manufacturing method according to one of Claims 6 to 9,
in which a nitride layer (7) is deposited on the silicon dioxide sealing layer (6) and a silicon oxide auxiliary layer (17) is deposited on said nitride layer (7) for the purpose of planarization and is subsequently planarized as far as the nitride layer (7).

11. Manufacturing method according to one of Claims 6 to 9,
in which at first a nitride layer (7) and then a silicon dioxide sealing layer (6) are deposited on the oxidized-on structures in the silicon layer (12) or in the silicon substrate (1) and said silicon dioxide sealing layer (6) is then planarized as far as the nitride layer (7).

12. Manufacturing method according to one of Claims 10 or 11,
in which the planarization is carried out by means of chemical-mechanical polishing (CMP) of the silicon oxide auxiliary layer (17) or of the silicon dioxide sealing layer (6), with the nitride layer (7) serving as a planarization stop.

13. Manufacturing method according to one of Claims 6 or 9,
in which the levelling is carried out by means of a spin-on-glass method or by means of a flow-glass method.

## Revendications

1. Capteur de débit massique micromécanique, comportant
- une structure en couches à la surface d'un substrat de silicium (1), la structure en couches comprenant une couche conductrice d'électricité à partir de laquelle est structuré au moins un élément chauffant (8), et
- une isolation thermique entre l'élément chauffant (8) et le substrat de silicium (1), comprenant un bloc de dioxyde de silicium (5), fabriqué sous l'élément chauffant (8) soit dans la structure en couches sur le substrat de silicium, soit à la surface du substrat de silicium (1), et qui présente une pluralité d'espaces creux (4) verticaux en forme de fente,
**caractérisé en ce que**
les espaces creux (4) sont fermés par une couche d'obturation (6).

2. Capteur selon la revendication 1,
**caractérisé en ce qu'**
on applique sur le substrat de silicium (1) une couche de dioxyde de silicium (11) et par-dessus une couche de silicium (12), et le bloc de dioxyde de silicium (5) est fabriqué dans la couche de silicium (12).

3. Capteur selon la revendication 2,
**caractérisé en ce que**
la couche de dioxyde de silicium (11) est retirée à une certaine distance en dessous du bloc de dioxyde de silicium (5) et à cet endroit est formé un espace creux horizontal (13) orienté vers le substrat de silicium (1).

4. Capteur selon la revendication 3,
**caractérisé en ce qu'**
au moins un élément de support (14) adjacent vers le haut au niveau du bloc de dioxyde de silicium (5) et adjacent vers le bas au niveau du substrat de silicium (1) est disposé dans l'espace creux horizontal (13).

5. Capteur selon l'une quelconque des revendications 1 à 4,
**caractérisé en ce qu'**
une couche d'obturation de dioxyde de silicium (6) et une couche de nitrure de silicium (7) sont placées entre le bloc de dioxyde de silicium (5) et la couche conductrice d'électricité structurée.

6. Procédé de fabrication d'un capteur selon la revendication 1, selon lequel
- après la structuration d'un masque de gravure, qui est appliqué soit sur une couche de silicium (12) appliquée au-dessus d'une couche de dioxyde de silicium (11) sur le substrat de silicium ( 1), soit directement sur le substrat de silicium (1), on produit par gravure des creux (2) approximativement verticaux dans le matériau de silicium (1, 12) situé sous le masque de gravure, des tiges (3) de silicium restant entre les creux (2),
**caractérisé en ce que**
- les tiges (3) sont ensuite complètement oxydées par oxydation thermique,
- un bloc de dioxyde de silicium (5) produit ainsi de façon micromécanique en surface dans la couche de silicium (12) ou dans le substrat de silicium (1) est recouvert par dépôt d'une couche d'obturation de dioxyde de silicium (6),
- et avant le dépôt et la structuration de la couche conductrice d'électricité, on met en oeuvre une étape de planarisation pour la production d'une surface lisse sur le bloc de dioxyde de silicium (5).

7. Procédé de fabrication selon la revendication 6,
**caractérisé en ce que**
le masque de gravure est appliqué sur la couche de silicium (12), et avant l'oxydation des tiges (3), la couche de dioxyde de silicium (11) est au moins partiellement retirée via une étape de gravure en phase gazeuse afin de créer un espace creux horizontal (13) en dessous de la zone structurée de la couche de silicium (12).

8. Procédé de fabrication selon la revendication 7,
**caractérisé en ce que**
la couche de dioxyde de silicium (11) est structurée pour la création d'au moins un élément de support (14) dans l'espace creux (13), avant l'application de la couche de silicium (12).

9. Procédé de fabrication selon la revendication 6,
**caractérisé en ce que**
la couche de silicium (12) ou le substrat de silicium (1) est gravé par en dessous par gravure isotrope sous un masque rigide (15), et le masque rigide (15) reste après la gravure sur les tiges (15) et est ensuite également recouvert.

10. Procédé de fabrication selon l'une quelconque des revendications 6 à 9,
**caractérisé en ce que**
sur la couche d'obturation de dioxyde de silicium (6) est déposée une couche de nitrure, sur laquelle, pour la planarisation, une couche auxiliaire de dioxyde de silicium (17) est déposée puis est planarisée jusqu'à la couche de nitrure (7).

11. Procédé de fabrication selon l'une quelconque des revendications 6 à 9,
**caractérisé en ce que**
sur les structures oxydées dans la couche de silicium (12) ou dans le substrat de silicium (1), on dépose tout d'abord une couche de nitrure (7) puis une couche d'obturation de dioxyde de silicium (6), cette dernière étant ensuite planarisée jusqu'à la couche de nitrure (7).

12. Procédé de fabrication selon l'une quelconque des revendications 10 ou 11,
**caractérisé en ce que**
la planarisation s'effectue par polissage chimico-mécanique (CMP) de la couche auxiliaire de dioxyde de silicium (17) ou de la couche d'obturation de dioxyde de silicium (6), la couche de nitrure (7) servant de barrière à la planarisation.

13. Procédé de fabrication selon l'une quelconque des revendications 6 à 9,
**caractérisé en ce que**
la planarisation s'effectue par un procédé « Spin-on-glass » ou par un procédé « Flow-glass ».
